# EUROPEAN PATENT APPLICATION

(11) **EP 3 890 133 A1**
(43) Date of publication of application: **06.10.2021**
(21) Application number: 20167523.8
(22) Date of filing: 01.04.2020
(51) Int. Cl.: H02G 3/06, H02G 3/00, H02G 3/04

(54) **ELECTRICAL INSTALLATION ACCESSORY, USE AND METHOD FOR PRODUCING THEREOF**

(71) Applicant: ABB Schweiz AG, 5400 Baden (CH)
(72) Inventor: Luomi, Juho, 06100 Porvoo (FI); Andersson, Johan, 06100 Porvoo (FI)
(74) Representative: Kolster Oy Ab

(57) **Abstract**

An electrical installation accessory, comprising a tubular body part (10), a first electrical installation pipe connector (20A) having a first end (21A) and a second end (22A) and connected to a first end of the tubular body part, and a second electrical installation pipe connector (20B) having a first end (21B) and a second end (22B) and connected to the second end of the tubular body part, wherein the second end (22A) of the first electrical installation pipe connector (20A) and the second end (22B) of the second electrical installation pipe connector (20B) are configured to be connected to electrical installation pipes of the same diameter size, and wherein the first electrical installation pipe connector (20A) and/or the second electrical installation pipe connector (20B) comprise visual indicator means configured to make the first electrical installation pipe connector and the second electrical installation pipe connector visually distinguishable from one another.

## Description

### FIELD

The present invention relates to an electrical installation accessory, to a use thereof, and to a method for producing an electrical installation accessory.

### BACKGROUND

In installation of electric lines, i.e. wiring, electrical installation pipes may be used for protecting and routing the electric lines within a structure such as a building structure. Such electrical installation pipe, i.e. an electrical conduit or tubing, may provide protection to enclosed electric lines against impacts, moisture, and chemical vapors, for example. Varying numbers, sizes, and types of electric lines can be pulled into an electrical installation pipe, which may simplify the installation, for instance. Electric wiring systems in buildings, for example, may be subject to frequent alterations. Such wiring changes may be simpler through the use of electrical installation pipes, as existing conductors can be withdrawn and new conductors installed, with little disruption along the path of the electrical installation pipes.

An electrical installation pipe system can be made waterproof or submersible. Some types of electrical installation pipes may be encased in concrete or similar material, e.g. in a building element made of concrete. This kind of solution may be used in buildings to allow e.g. electrical outlets, junction boxes or installation boxes to be installed in the middle of such building elements, for example.

A problem related to e.g. a situation in which an electrical installation pipe is encased in a building element, or a similar structure, and one end thereof is connected to e.g. an electrical outlet, a junction box, installation boxes or any other corresponding entity in the building element while the other end of the electrical installation pipe may be left unconnected and extending out of the building element in order to enable the connection thereof, when the building element is installed in a building and joined to other building elements, for instance. Then, when there are two such electrical installation pipes encased in the building element within close distance from one another, e.g. two pipes connected to two installation boxes on opposite sides of the building element and the free ends of the two pipes extending out of the building element next to each other, it may be difficult to know which pipe end leads to which installation box, which may slow down the electrical installation work when the electric lines are to be installed in the electrical installation pipes.

### BRIEF DESCRIPTION

An object of the present invention is thus to provide a product so as to overcome the above problem or at least to alleviate the above problem. The objects of the invention are achieved by an electrical installation accessory, a use and a method for producing thereof, which are characterized by what is stated in the independent claims. The preferred embodiments of the invention are disclosed in the dependent claims.

The invention is based on the idea of providing an electrical installation accessory, comprising two electrical installation pipe connectors connected to a tubular body part, wherein free ends of the two electrical installation pipe connectors are configured to be connected to electrical installation pipes of the same diameter size, and wherein at least one of the two electrical installation pipe connectors comprise visual indicator means configured to make the two electrical installation pipe connectors visually distinguishable from one another.

An advantage of the solution of the invention is that the electrical installation accessory can be connected to an electrical installation pipe, which may be used in a building element, in two different ways and hence the unconnected end thereof can be used for identifying the electrical installation pipe in question, which can facilitate the electrical installation work.

### BRIEF DESCRIPTION OF THE DRAWINGS

In the following the invention will be described in greater detail by means of preferred embodiments with reference to the attached drawings, in which
Figure 1 illustrates an example of an electrical installation accessory according to an embodiment;
Figure 2 illustrates an example of an electrical installation accessory according to an embodiment;
Figure 3 illustrates an example of an electrical installation accessory according to an embodiment; and
Figure 4 illustrates an example of an electrical installation accessory according to an embodiment.

### DETAILED DESCRIPTION

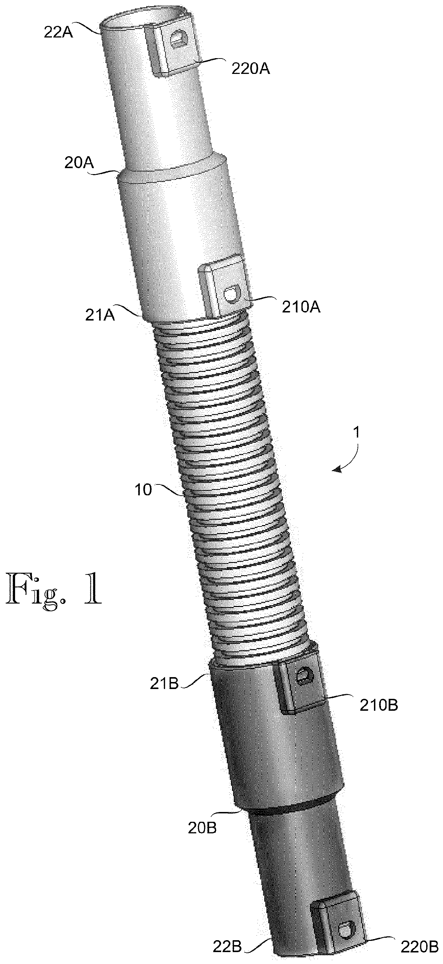

Figure 1 is an example of an electrical installation accessory according to an embodiment. The exemplary electrical installation accessory 1 comprises a tubular body part 10, a first electrical installation pipe connector 20A, and a second electrical installation pipe connector 20B. A first end 21A of the first electrical installation pipe connector 20A is connected to the first end of the tubular body part 10 and a first end 21B of the second electrical installation pipe connector 20B is connected to the second end of the tubular body part 10. The first electrical installation pipe connector 20A may comprise, preferably in each end thereof, appropriate fastening means 210A, 220A for fastening the connector to an electrical installation pipe as illustrated in the example. In a similar manner, the second electrical installation pipe connector 20B may comprise, preferably in each end thereof, suitable fastening means 210B, 220B for fastening the connector to an electrical installation pipe as also illustrated in the example.

According to an embodiment, the second end 22A of the first electrical installation pipe connector 20A and the second end 22B of the second electrical installation pipe connector 20B are configured to be connected to electrical installation pipes of the same diameter size. In other words, the second end 22A of the first electrical installation pipe connector 20A and the second end 22B of the second electrical installation pipe connector 20B, i.e. the free ends of the connectors 20A, 20B in Figure 1, are essentially of the same nominal diameter size such that they could both be connected to an electrical installation pipe of a certain diameter size corresponding to such nominal diameter size. The nominal diameter size of the free ends of the connectors 20A, 20B, i.e. the diameter size of the electrical installation pipe that the second end 22A of the first electrical installation pipe connector 20A and the second end 22B of the second electrical installation pipe connector 20B are configured to be connected to, may be selected according to the designed use or purpose of the electrical installation accessory 1, for instance. Some possible examples of such nominal diameter sizes, expressed as an outer diameter of the electrical installation pipe, includes sizes 16, 20, 25, 32, 40 and 50 mm. However, any diameter size may be selected. In the example of Figure 1, the inner diameter of the second end 22A of the first electrical installation pipe connector 20A and the second end 22B of the second electrical installation pipe connector 20B would then be somewhat larger than the selected nominal diameter size of the electrical installation pipe such that the second end 22A of the first electrical installation pipe connector 20A and the second end 22B of the second electrical installation pipe connector 20B can receive the end of the electrical installation pipe of the selected nominal diameter size therein.

According to an embodiment, the first electrical installation pipe connector 20A and/or the second electrical installation pipe connector 20B comprise visual indicator means configured to make the first electrical installation pipe connector 20A and the second electrical installation pipe connector 20B visually distinguishable from one another. According to an embodiment, the visual indicator means may comprise a colouring of the first electrical installation pipe connector 20A and a colouring of the second electrical installation pipe connector 20B such that the colouring of the first electrical installation pipe connector is different from the colouring of the second electrical installation pipe connector. Term colouring herein generally refers not only to colour categories with names, such as red, orange, yellow, green, blue, purple, black or white and variations thereof, but also to an intensity of the colour and/or a pattern or a structure of the colour, for example, which may be normally perceivable by the human eye and brain. Thus, e.g. a light grey installation pipe connector and a dark grey installation pipe connector may be considered as having different colourings. In order to facilitate the first electrical installation pipe connector 20A and the second electrical installation pipe connector 20B to be distinguished from each other, they may be coloured clearly and expressly different from one another, such as one of them black and the other white or red, for instance. According to an embodiment, at least a portion of a body of the first electrical installation pipe connector 20A is made from a first material having a first colour and at least a portion of a body of the second electrical installation pipe connector 20B is made from a second material having a second colour, wherein the first colour is different from the second colour. Accordingly, the body of the first electrical installation pipe connector 20A and the body of the second electrical installation pipe connector 20B, or at least parts thereof, may be manufactured from materials having different colours to be distinguishable from each other. As an example, suitable plastic materials of different colours could be used for the manufacturing thereof. Also a metal or a composite material, or any combination of plastic, composite and/or metal materials could be used. According to an embodiment, either additionally or alternatively, the visual indicator means may comprise a printing, an embossing and/or a debossing in at least one of the first electrical installation pipe connector and the second electrical installation pipe connector. Accordingly, the first electrical installation pipe connector 20A and/or the second electrical installation pipe connector 20B may comprise e.g. a lettering, a numbering and/or other kind of marking (not shown in the figures) on the outer surface thereof implemented as a printing, an embossing and/or a debossing such that makes the first electrical installation pipe connector 20A and the second electrical installation pipe connector 20B distinguishable from each other.

According to an embodiment, the tubular body part 10 comprises an electrical installation pipe, i.e. an electrical conduit or tubing. Accordingly, the tubular body part 10 may be comprised of one piece of electrical installation pipe or two or more pieces of electrical installation pipe connected together, for example. The length of the tubular body part 10 may be selected according to the designed use or purpose of the electrical installation accessory 1, for instance. As an example, the length of the tubular body part 10 may vary from a few centimetres, or from a few tens of centimetres to several metres or tens of metres. According to an embodiment, the electrical installation pipe comprised by the tubular body part 10 is flexible. The use of flexible pipe has the advantage that if the electrical installation accessory 1 is used for connecting to an electrical installation pipe encased in a building element or the like and the free end of the electrical installation accessory 1 extends out of the building element, the flexibility of the tubular body part 10 may prevent or at least reduce damage to the electrical installation accessory 1 e.g. during a transport or storage of such a building element or the like. As an example, a ribbed flexible pipe as shown in the figures may be used as the tubular body part 10 or at least a part thereof. However, also rigid electrical installation pipe or a combination of flexible and rigid pipes may be used. The material of the electrical installation pipe comprised by the tubular body part 10 may be plastic. Also a metal or a composite material, or any combination of plastic, composite and/or metal materials could be used.

According to an embodiment, the electrical installation pipe comprised by the tubular body part 10 has an inner diameter size which is larger than an inner diameter size of the electrical installation pipes to which the second end 22A of the first electrical installation pipe connector 20A and the second end 22B of the second electrical installation pipe connector 20B are configured to be connected to. Consequently, the first ends 21A, 21B of the electrical installation pipe connectors 20A, 20B may have a larger nominal diameter size than the second ends 22A, 22B of the electrical installation pipe connectors as illustrated also in the example of Figure 1. It should be noted that the relationship between the nominal diameter size (e.g. if expressed as an outer diameter of the electrical installation pipe) and the inner diameter size of an electrical installation pipe may vary and may depend e.g. on the type of the pipe, since the wall thickness of the pipe may vary. As an example, a ribbed flexible type of pipe may have a larger difference between its inner and outer diameters than a smooth rigid type of pipe. Such electrical installation pipe connectors 20A, 20 with different diameter size ends are also called pipe reducers or reducing couplings. An advantage of the electrical installation pipe of the tubular body part 10 having a larger inner diameter size than electrical installation pipes to which the second ends 22A, 22B of the electrical installation pipe connectors 20A, 20B are configured to be connected to, is that it is easier to install one or more electric lines or wires through the electrical installation accessory 1 especially if the body part 10 thereof is bent or curved, for example.

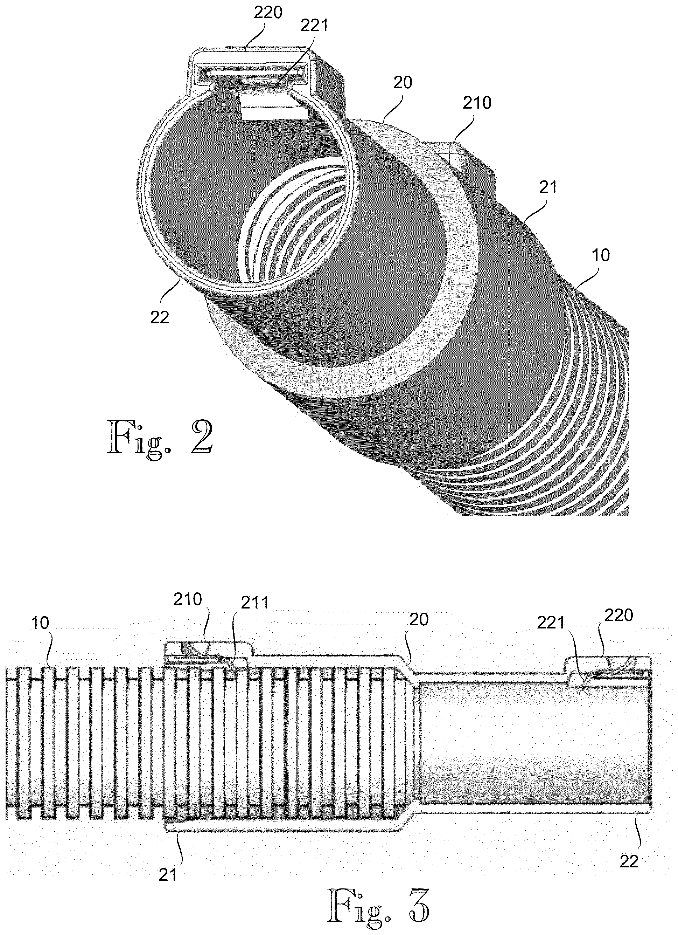

Figure 2 illustrates an example of an electrical installation accessory according to an embodiment. Only one end of the electrical installation accessory is visible in the figure such that it shows only one electrical installation pipe connector 20 (corresponding to the first electrical installation pipe connector 20A or to the second electrical installation pipe connector 20B in Figure 1), the first end 21 of which is connected to the tubular body part 10 by means of the fastening means 210. The corresponding fastening means 220 of the second end 22 are illustrated in more detail in the figure, and comprise a claw-like locking spring 221 for fastening an electrical installation pipe upon insertion thereof into the second end 22 of the electrical installation pipe connector 20. The locking spring 221 may be made of metal, for instance. It should be noted that the structure of the fastening means 210, 220 may vary from the example shown. As an example, the fastening means 210, 220 may each comprise more than one such locking spring 221. Also other kinds of fastening means could be used such as a clamp or a screw fastening or an adhesive fastening, for example. Figure 3 illustrates an example of an electrical installation accessory according to an embodiment. The example of Figure 3 corresponds to that of Figure 2 and shows the electrical installation pipe connector 20 cross-sectioned. As can be seen, the locking spring 211 of the first end 21 of the electrical installation pipe connector 20, which is connected to the tubular body part 10, engages the ribs of the electrical installation pipe comprised by the tubular body part 10 and thus locks the tubular body part 10. According to an embodiment, the fastening means 210, 220 are configured to fasten the connector 20 to an electrical installation pipe in a releasable manner. As an example, the locking springs 211, 221 may be released from a locked position thereof by suitable pushing them through the groove extending through the fastening means 210, 220 with a screwdriver or another tool.

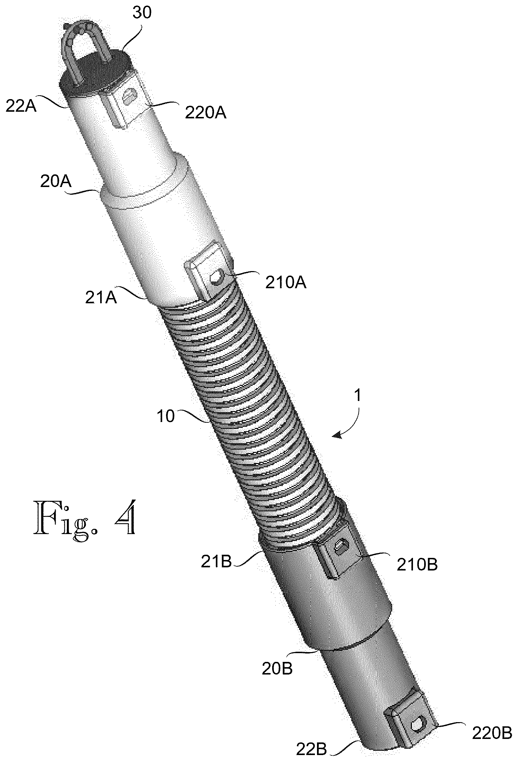

Figure 4 illustrates an example of an electrical installation accessory according to an embodiment. According to an embodiment, the electrical installation accessory 1 may comprise a cap 30 with which one of the free ends 22A, 22B of the electrical installation pipe connectors 20A, 20B may be closed as illustrated in the figure. When the electrical installation accessory 1 is connected, from one end thereof, to an electrical installation pipe encased in a building element or the like, the other end of the electrical installation accessory 1 may be closed with the cap 30, for example.

The electrical installation accessory 1 according to any one of the embodiments described herein, or to any combination thereof, may be used in a building element, such as a concrete building element. Such a building element may be a building element for a wall, a floor or a ceiling of a building, or a part thereof, for instance. As an example, when an electrical installation pipe is encased, or to be encased, in a building element, or a similar structure, and one end thereof is connected to e.g. an electrical outlet, a junction box, installation boxes or any other corresponding entity in the building element, the other end of the electrical installation pipe may be connected to an electrical installation accessory 1 as described herein. The connection may be performed such that the end of the electrical installation accessory 1 that remains free after the connection visually indicates and identifies the particular electrical installation pipe and/or the respective electrical outlet, junction box, installation box or other entity to which the electrical installation pipe in question is connected to. In other words, the electrical installation accessory 1 may be connected to the electrical installation pipe in a selected way out of the two possible ways that the desired end of the electrical installation accessory 1 remains free. As an example, when there are two such electrical installation pipes in the same building element within close distance from one another, e.g. two pipes connected to two installation boxes on opposite sides of the building element, then two identical electrical installation accessories 1 may be connected to the two electrical installation pipes, one to each, such that different ends of the two identical electrical installation accessories are left free. Since the different ends are distinguishable from each other, they consequently also distinguish the respective electrical installation pipes from one another. As a result, it is easy to identify which pipe end leads to which installation box based on the colouring or other visual indicator means of the free ends of the two electrical installation accessories 1.

According to an embodiment, a method for producing an electrical installation accessory may comprise providing a first electrical installation pipe connector 20A having a first end 21A and a second end 22A and a second electrical installation pipe connector 20B having a first end 21B and a second end 22B such that the second end of the first electrical installation pipe connector and the second end of the second electrical installation pipe connector are configured to be connected to electrical installation pipes of the same diameter size and such that the first electrical installation pipe connector and/or the second electrical installation pipe connector are provided with a visual indicator configured to make the first electrical installation pipe connector and the second electrical installation pipe connector visually distinguishable from one another. Moreover, a tubular body part 10 having a first end and a second end is provided, the first end 21A of the first electrical installation pipe connector 20A is connected to the first end of the tubular body part 10, and the first end 21B of the second electrical installation pipe connector 20B is connected to the second end of the tubular body part 10. According to an embodiment, the providing of the first electrical installation pipe connector 20A and/or the second electrical installation pipe connector 20B with the visual indicator may comprise manufacturing at least a portion of a body of the first electrical installation pipe connector from a first material having a first colour and manufacturing at least a portion of a body of the second electrical installation pipe connector from a second material having a second colour, wherein the first colour is different from the second colour. According to an embodiment, the providing of the first electrical installation pipe connector 20A and/or the second electrical installation pipe connector 20B with the visual indicator may comprise providing an embossing and/or a debossing in at least one of the first electrical installation pipe connector and the second electrical installation pipe connector. According to an embodiment, the providing of the tubular body part 10 may comprise providing an electrical installation pipe of predetermined, i.e. desired, length.

It will be obvious to a person skilled in the art that, as the technology advances, the inventive concept can be implemented in various ways. The invention and its embodiments are not limited to the examples described above but may vary within the scope of the claims.

## Claims

1. An electrical installation accessory, comprising:
a tubular body part (10) having a first end and a second end;
a first electrical installation pipe connector (20A) having a first end (21A) and a second end (22A), wherein the first end of the first electrical installation pipe connector is connected to the first end of the tubular body part (10), and
a second electrical installation pipe connector (20B) having a first end (21B) and a second end (22B), wherein the first end of the second electrical installation pipe connector is connected to the second end of the tubular body part (10),
wherein the second end (22A) of the first electrical installation pipe connector (20A) and the second end (22B) of the second electrical installation pipe connector (20B) are configured to be connected to electrical installation pipes of the same diameter size, and
wherein the first electrical installation pipe connector (20A) and/or the second electrical installation pipe connector (20B) comprise visual indicator means configured to make the first electrical installation pipe connector and the second electrical installation pipe connector visually distinguishable from one another.

2. An electrical installation accessory as claimed in claim 1, wherein the visual indicator means comprise a colouring of the first electrical installation pipe connector (20A) and a colouring of the second electrical installation pipe connector (20B) such that the colouring of the first electrical installation pipe connector is different from the colouring of the second electrical installation pipe connector.

3. An electrical installation accessory as claimed in claim 2, wherein at least a portion of a body of the first electrical installation pipe connector (20A) is made from a first material having a first colour and at least a portion of a body of the second electrical installation pipe connector (20B) is made from a second material having a second colour, wherein the first colour is different from the second colour.

4. An electrical installation accessory as claimed in claim 1, 2 or 3, wherein the visual indicator means comprise a printing, an embossing and/or a debossing in at least one of the first electrical installation pipe connector (20A) and the second electrical installation pipe connector (20B).

5. An electrical installation accessory as claimed in any one of claims 1 to 4, wherein the tubular body part (10) comprises an electrical installation pipe.

6. An electrical installation accessory as claimed in claim 5, wherein the electrical installation pipe comprised by the tubular body part (10) is flexible.

7. An electrical installation accessory as claimed in claim 5 or 6, wherein the electrical installation pipe comprised by the tubular body part (10) has an inner diameter size which is larger than an inner diameter size of the electrical installation pipes to which the second end (22A) of the first electrical installation pipe connector (20A) and the second end (22B) of the second electrical installation pipe connector (20B) are configured to be connected to.

8. An electrical installation accessory as claimed in claim 5, 6 or 7, wherein the electrical installation pipe comprised by the tubular body part (10) is made from plastic.

9. Use of an electrical installation accessory as claimed in any one of claims 1 to 8 in a building element.

10. A method for producing an electrical installation accessory, the method comprising:
providing a first electrical installation pipe connector (20A) having a first end (21A) and a second end (22A) and a second electrical installation pipe connector (20B) having a first end (21B) and a second end (22B) such that the second end of the first electrical installation pipe connector and the second end of the second electrical installation pipe connector are configured to be connected to electrical installation pipes of the same diameter size and such that the first electrical installation pipe connector and/or the second electrical installation pipe connector are provided with a visual indicator configured to make the first electrical installation pipe connector and the second electrical installation pipe connector visually distinguishable from one another;
providing a tubular body part (10) having a first end and a second end;
connecting the first end (21A) of the first electrical installation pipe connector (20A) to the first end of the tubular body part (10); and
connecting the first end (21B) of the second electrical installation pipe connector (20B) to the second end of the tubular body part (10).

11. A method for producing an electrical installation accessory as claimed in claim 10, wherein the providing of the first electrical installation pipe connector (20A) and/or the second electrical installation pipe connector (20B) with the visual indicator comprises manufacturing at least a portion of a body of the first electrical installation pipe connector from a first material having a first colour and manufacturing at least a portion of a body of the second electrical installation pipe connector from a second material having a second colour, wherein the first colour is different from the second colour.

12. A method for producing an electrical installation accessory as claimed in claim 10 or 11, wherein the providing of the first electrical installation pipe connector (20A) and/or the second electrical installation pipe connector (20B) with the visual indicator comprises providing an embossing and/or a debossing in at least one of the first electrical installation pipe connector and the second electrical installation pipe connector.

13. A method for producing an electrical installation accessory as claimed in claim 10, 11 or 12, wherein the providing of the tubular body part (10) comprises providing an electrical installation pipe of a predetermined length.

14. A method for producing an electrical installation accessory as claimed in claim 13, wherein the provided electrical installation pipe of the predetermined length has an inner diameter size which is larger than an inner diameter size of the electrical installation pipes to which the second end (22A) of the first electrical installation pipe connector (20A) and the second end (22B) of the second electrical installation pipe connector (20B) are configured to be connected to.
